Europäisches Patentamt

European Patent Office

Office européen des brevets

(11) Numéro de publication : **0 553 586 B1**

(12) **FASCICULE DE BREVET EUROPEEN**

(45) Date de publication du fascicule du brevet :
**11.08.93 Bulletin 93/32**

(51) Int. Cl.⁵ : **C03C 3/078**

(21) Numéro de dépôt : **92440024.5**

(22) Date de dépôt : **19.02.92**

(54) **Compositions de cristal sans plomb.**

(43) Date de publication de la demande :
**04.08.93 Bulletin 93/31**

(45) Mention de la délivrance du brevet :
**11.08.93 Bulletin 93/32**

(84) Etats contractants désignés :
**AT BE CH DE DK ES FR GB GR IT LI LU MC NL PT SE**

(56) Documents cités :
**AT-B- 346 006
DE-B- 1 050 965
CHEMICAL ABSTRACTS, vol. 103, no. 26, 30 December 1985, Columbus, Ohio, US; abstract no. 219789T, page 284 ;column R ; & JP-A-60 122 747 (OHARA OPTICAL GLASS MFG CO LTD) 1.7.1985
CHEMICAL ABSTRACTS, vol. 110, no. 2, 9 January 1989, Columbus, Ohio, US; abstract no. 12366B, page 259 ;column R ; & JP-A-63 169 601 (NIPPON SHEET GLASS CO LTD) 13.7.1988**

(73) Titulaire : **COMPAGNIE DES CRISTALLERIES DE BACCARAT
BP.31
F-54120 Baccarat (FR)**

(72) Inventeur : **Cornier, Gérard
390 Chemin des Grandes Royes
F-88100 Sainte Marguerite (FR)**
Inventeur : **Vasseur, Daniel
5 Avenue Général Rouvillois
F-54120 Baccarat (FR)**

(74) Mandataire : **Bossard, Jacques-René
Meyer & Partenaires Conseils en Propriété Industrielle Bureaux Europe 20, place des Halles
F-67000 Strasbourg (FR)**

## Description

La présente invention concerne une nouvelle composition de verre présentant les propriétés caractéristiques du cristal, mais ne contenant pas de plomb.

Le cristal au plomb, dont la fabrication remonte à environ 1675, possède un ensemble de qualités qui en font un matériau de choix pour des articles de luxe tels que les vases, les lustres, les pièces de décoration, les articles de tables, et analogues. Les plus importantes de ces qualités sont la densité (de l'ordre de 2,9 au moins), et l'indice de réfraction (de l'ordre de 1,545 au moins) (norme française NFT 30004) qui assurent à ce matériau son éclat, sa sonorité caractéristique et sa limpidité.

Toutefois, ces qualités résultent de la présence, dans la composition du cristal, d'une proportion élevée en oxyde de plomb (de l'ordre de 24 % au moins et de préférence de 30 %), qui permet de fondre à température plus basse et de disposer d'un long intervalle de température, dit "palier de travail", à savoir allant d'environ 600°C jusqu'à 1200°C et dans lequel la viscosité du matériau rend possible son façonnage par l'artisan. De plus, le verre au plomb est suffisamment tendre pour être poli, gravé et taillé facilement à froid.

Cet oxyde de plomb entraîne des inconvénients bien connus liés à sa toxicité : c'est pourquoi son emploi est soumis à une réglementation tant sur les lieux de travail que vis à vis de l'environnement. Par ailleurs, on a constaté qu'au contact de produits alimentaires acides, liquides ou solides, et notamment des alcools contenus dans des flacons en cristal, le plomb du cristal tend à migrer vers ces produits.

Divers moyens ont été préconisés assez récemment pour empêcher ou limiter cette migration.

Ainsi, on a proposé de déposer sur la surface du cristal une mince pellicule de verre sans plomb par soufflage simultané de couches superposées de verre au plomb et de verre sans plomb. On a également appliqué un procédé dit par cémentation, dans lequel les ions plomb de la zone superficielle de la paroi intérieure d'un récipient subissent un processus d'échange d'ions avec une barbotine de kaolin temporairement appliqué sur la surface du cristal, avec création d'une barrière vis à vis de la diffusion du plomb, après un cycle thermique.

Ces procédés sont relativement longs et coûteux à appliquer et les réglementations visant à fixer la teneur maximale admissible de plomb dans les produits alimentaires, tendent à être de plus en plus rigoureuses.

C'est pourquoi la Déposante a recherché une composition de verre exempte de plomb mais conservant les avantages qu'il apportait, c'est à dire ne contenant que des composants non toxiques, disponibles industriellement et pas trop coûteux, tout en présentant une densité supérieure ou égale à 2,9, un indice de réfraction supérieur ou égal à 1,545, une sonorité et une limpidité comparables à celles du cristal.

Sous son aspect le plus général, l'invention vise donc une composition contenant, en pourcentage en poids :

| | | | |
|---|---|---|---|
| 53,0 | à | 58,0 | de silice $SiO_2$ |
| 6,0 | à | 10,0 | d'oxyde de potassium $K_2O$ |
| 4,5 | à | 7,5 | d'oxyde de sodium $Na_2O$ |
| 0,0 | à | 9,00 | d'oxyde de calcium $CaO$ |
| 0,0 | à | 12,00 | d'oxyde de strontium $SrO$ |
| 16,0 | à | 21 | d'oxyde de zinc $ZnO$ |
| 0,5 | à | 1,5 | d'oxyde d'antimoine $Sb_2O_3$ |
| 0,0 | à | 1,5 | d'oxyde d'aluminium $Al_2O_3$ |
| 0,0 | à | 2,5 | d'oxyde d'étain $SnO_2$ |
| 0,0 | à | 1,2 | d'oxyde de bore $B_2O_3$ |
| 0,0 | à | 3,0 | d'oxyde de lanthane $La_2O_3$ |
| 0,0 | à | 2,0 | d'oxyde de titane $TiO_2$ |
| 0,0 | à | 0,3 | d'oxyde de lithium $Li_2O$ |

la somme des oxydes de calcium, de strontium et de zinc étant comprise entre 26,5 et 31 %, avec comme conditions supplémentaires :
- quand $SrO = 0$

CaO peut aller jusqu'à 9

- et quand SrO ≠ 0,

CaO est compris entre 0 et le complément à 31, diminué de SrO + ZnO.

Le rôle de chaque constituant est multiple, puisque ces constituants dans leur ensemble doivent suppléer à l'absence de plomb et ce sont les diverses actions mutuelles de ces constituants dont la résultante représente le moyen d'atteindre les qualités nouvelles de la composition de verre sans plomb selon l'invention, ces qualités étant semblables à celles du cristal au plomb, mais sans en présenter les inconvénients précités. En particulier on peut citer parmi ces qualités :

1. Propriétés physiques voisines de celles du cristal au plomb :
   - densité supérieure ou égale à 2,9,
   - indice de réfraction supérieur ou égal à 1,545
   - coefficient de dilatation voisin de 95. $10^{-7}$/°C

2. La possibilité de fondre et d'affiner le mélange vitrifiable dans les conditions de durée et de température habituellement utilisées pour le cristal au plomb, et avec les mêmes moyens.

3. Une aptitude au travail à la main pour l'obtention d'articles pressés et soufflés, et,

4. Une aptitude au façonnage à froid très voisine de celle du cristal au plomb.

Ainsi, bien entendu, la composition de base selon l'invention comprend une proportion prépondérante de silice, constituant formateur du réseau vitreux. Toutefois, on remarquera que cette proportion est comparativement plus faible que dans les compositions classiques de cristal. Cet abaissement est motivé par la nécessité d'apporter, dans la composition, des quantités plus importantes d'oxydes de métaux relativement moins lourds que le plomb, et non toxiques.

En ce qui concerne la présence des oxydes de métaux alcalins, modificateurs de réseau, la proportion d'oxyde de sodium a été accrue aux dépends de l'oxyde de potassium usuellement présent dans le cristal. Il est vrai que l'oxyde de sodium est plus corrosif vis à vis des réfractaires utilisés pour la fusion des verres, mais c'est un fondant plus efficace que l'oxyde de potassium, ce qui compense partiellement l'absence de plomb.

A cet égard, l'oxyde de lithium aurait été encore plus efficace, mais il est trop corrosif, de sorte que sa teneur doit être abaissée au niveau le plus bas possible.

En ce qui concerne les oxydes des métaux alcalino-terreux, dont l'utilité est d'abaisser la viscosité à chaud tout en accroissant la densité, effets compensant également l'absence de plomb, il est bien entendu que l'oxyde de baryum, apportant le métal le plus lourd, n'est malheureusement pas utilisable en raison de sa toxicité.

On a donc, entre les oxydes de calcium et de strontium, privilégié le second, qui contribue davantage à la densité de la composition ainsi qu'à son indice de réfraction, malgré son prix plus élevé.

Par contre, la proportion de cet oxyde de strontium doit être limitée en raison de son action opacifiante et colorante sur la composition et de son influence importante sur le coefficient de dilatation du verre résultant.

La même remarque vaut pour l'oxyde de zinc, dernier métal divalent de la composition, qui, pourtant, allonge sensiblement le palier de travail. Par contre, n'agissant guère sur le coefficient de dilatation, sa proportion a pu être sensiblement augmentée.

Pris conjointement, les trois oxydes divalents utilisés (CaO, SrO et ZnO) représentent environ 26,5 à 31 %, dans des rapports pouvant varier assez largement, comme le montrent les exemples particuliers qui suivent.

Enfin, figurent dans la composition, à titre facultatif, un ou plusieurs des oxydes d'antimoine, d'aluminium, d'étain, de bore et de lanthane, dont les rôles sont multiples à faible dose.

Ainsi, au titre d'affinant des compositions, on pourrait utiliser des oxydes d'antimoine, d'arsenic ou de cérium. On a retenu celui d'antimoine, car l'arsenic est à la fois toxique et volatil tandis que le cérium donnerait, même à faible dose une coloration jaune.

Les oxydes d'aluminium et de bore, ont l'avantage d'allonger le "palier de travail". On les utilise donc, en fait en cas de besoin, pour ajuster la composition à cet égard.

Il en est de même des oxydes de lanthane et d'étain, qui permettent d'ajuster la densité et par suite l'indice de réfraction tout en ayant malheureusement l'inconvénient d'être relativement coûteux.

Bien entendu, on peut également ajouter à la composition de base des oxydes colorants ou d'autres composants au contraire décolorants de manière connue en soi dans ce domaine.

Les exemples ci-après illustrent les différentes variantes que l'on peut apporter aux compositions selon l'invention tout en restant dans le cadre de la définition générique telle qu'apparaissant à la revendication 1 ci-après.

Dans ces exemples, les proportions des différents constituants sont données en pourcentage en poids. La température de travail ($T_w$) indiquée est celle "à laquelle la viscosité du verre est convenable pour les différentes opérations de formage (soufflage, pressage etc...)" (selon la norme française NF B30010) c'est à dire de l'ordre de $10^4$ poises tandis que la température de Littleton est celle d'un ramollissement à une viscosité de

$10^{7,6}$ poises.

Exemple 1 :

| | |
|---|---|
| $SiO_2$ | **53.544** |
| $K_2O$ | **8.206** |
| $Na_2O$ | **5.200** |
| CaO | **8.800** |
| SrO | **1.200** |
| ZnO | **20.400** |
| $B_2O_3$ | **0.300** |
| $Sb_2O_3$ | **0.750** |
| $SnO_2$ | **0.650** |
| $La_2O_3$ | **0.950** |
| TOTAL | **100.000** |

Avec cette composition, on obtient un verre présentant les caractéristiques suivantes :

| | |
|---|---|
| Densité (D) | **2,90** |
| Coefficient de dilatation | **$95.1.10^{-7}$** |
| Indice de réfraction ($n_D$) | **1,561** |
| Température de travail ($T_w$) | **1036°C** |
| T Littleton | **754°C** |

Exemple 2 :

| | |
|---|---|
| $SiO_2$ | **55.925** |
| $K_2O$ | **8.975** |
| $Na_2O$ | **4.800** |
| SrO | **8.900** |
| ZnO | **18.800** |
| $B_2O_3$ | **0.300** |
| $Sb_2O_3$ | **0.750** |
| $SnO_2$ | **0.600** |
| $La_2O_3$ | **0.950** |
| TOTAL | **100.00** |

Avec cette composition, on obtient un verre présentant les caractéristiques suivantes :

| | |
|---|---|
| Densité (D) | **2,90** |
| Coefficient de dilatation | **$94.8.10^{-7}$** |
| Indice de réfraction ($n_D$) | **1,551** |
| Température de travail ($T_w$) | **1046°C** |
| T Littleton | **753°C** |

Exemple 3 :

| | |
|---|---|
| $SiO_2$ | **55.150** |
| $K_2O$ | **8.900** |
| $Na_2O$ | **4.600** |
| CaO | **1.600** |
| SrO | **8.200** |
| ZnO | **18.800** |
| $B_2O_3$ | **0.400** |
| $Sb_2O_3$ | **0.750** |
| $SnO_2$ | **0.800** |
| $La_2O_3$ | **0.800** |
| TOTAL | **100.00** |

Avec cette composition, on obtient un verre présentant les caractéristiques suivantes :

| | |
|---|---|
| Densité (D) | **2,91** |
| Coefficient de dilatation | **$94.7.10^{-7}$** |
| Indice de réfraction ($n_D$) | **1,554** |

| Température de travail ($T_w$) | **1052°C** |
|---|---|
| T Littleton | **752°C** |

Exemple 4 :

| | |
|---|---|
| SiO$_2$ | **55.250** |
| K$_2$O | **6.000** |
| Na$_2$O | **6.800** |
| CaO | **6.200** |
| SrO | **6.500** |
| ZnO | **16.800** |
| Sb$_2$O$_3$ | **0.750** |
| Al$_2$O$_3$ | **0.300** |
| SnO$_{2\,(K)}$ | **0.800** |
| La$_2$O$_3$ | **0.600** |
| TOTAL | **100.000** |

Avec cette composition, on obtient un verre présentant les caractéristiques suivantes :

| | |
|---|---|
| Densité (D) | **2,90** |
| Coefficient de dilatation | **96.4.10$^{-7}$** |
| Indice de réfraction ($n_D$) | **1,558** |
| Température de travail ($T_w$) | **1032°C** |
| T Littleton | **740°C** |

On constate que, par rapport aux normes officielles caractérisant le cristal au plomb, à savoir :
- densité supérieure ou égale à 2,90
- indice de réfraction supérieur ou égal à 1,545

les verres selon l'invention présentant des caractéristiques satisfaisant ces normes.

Leur limpidité et leur sonorité sont pour tous semblables à celles du cristal.

## Revendications

1. Composition de verre possédant les propriétés caractéristiques du cristal, à savoir une densité d'au moins 2,90, un indice de réfraction d'au moins 1,545, ainsi qu'une sonorité caractéristique et une limpidité élevée, mais ne contenant aucun élément toxique et notamment ni plomb ni baryum, caractérisée en ce qu'elle contient en pourcentage, en poids :

| | | | |
|---|---|---|---|
| 53,0 | à | 58,0 | de silice SiO$_2$ |
| 6,0 | à | 10,0 | d'oxyde de potassium K$_2$O |
| 4,5 | à | 7,5 | d'oxyde de sodium Na$_2$O |
| 0,0 | à | 9,00 | d'oxyde de calcium CaO |
| 0,0 | à | 12,00 | d'oxyde de strontium SrO |
| 16,0 | à | 21,0 | d'oxyde de zinc ZnO |
| 0,5 | à | 1,5 | d'oxyde d'antimoine Sb$_2$O$_3$ |
| 0,0 | à | 1,5 | d'oxyde d'aluminium Al$_2$O$_3$ |
| 0,0 | à | 2,5 | d'oxyde d'étain SnO$_2$ |
| 0,0 | à | 1,2 | d'oxyde de bore B$_2$O$_3$ |
| 0,0 | à | 3,0 | d'oxyde de lanthane La$_2$O$_3$ |
| 0,0 | à | 2,0 | d'oxyde de titane TiO$_2$ |
| 0,0 | à | 0,3 | d'oxyde de lithium Li$_2$O |

la somme des oxydes de calcium, de strontium et de zinc étant comprise entre 26,5 et 31 %, avec comme conditions supplémentaires :
- quand SrO = 0
  CaO peut aller jusqu'à 9
- et quand SrO ≠ 0,
  CaO est compris entre 0 et le complément à 31, diminué de SrO + ZnO.

2. Composition selon la revendication 1, caractérisée en ce que :

| | |
|---|---|
| $SiO_2$ | 53.544 |
| $K_2O$ | 8.206 |
| $Na_2O$ | 5.200 |
| CaO | 8.800 |
| SrO | 1.200 |
| ZnO | 20.400 |
| $B_2O_3$ | 0.300 |
| $Sb_2O_3$ | 0.750 |
| $SnO_2$ | 0.650 |
| $La_2O_3$ | 0.950 |
| TOTAL | 100.000 |

composition conduisant à un verre présentant les caractéristiques suivantes :

| | |
|---|---|
| Densité (D) | 2,90 |
| Coefficient de dilatation | $95.1.10^{-7}$ |
| Indice de réfraction ($n_D$) | 1,561 |
| Température de travail ($T_w$) | 1036°C |
| T Littleton | 754°C |

3. Composition selon la revendication 1, caractérisée en ce que :

| | |
|---|---|
| $SiO_2$ | 55.925 |
| $K_2O$ | 8.975 |
| $Na_2O$ | 4.800 |
| SrO | 8.900 |
| ZnO | 18.800 |
| $B_2O_3$ | 0.300 |
| $Sb_2O_3$ | 0.750 |
| $SnO_2$ (K) | 0.600 |
| $La_2O_3$ | 0.950 |
| TOTAL | 100.00 |

composition conduisant à un verre présentant les caractéristiques suivantes :

| | |
|---|---|
| Densité (D) | 2,90 |
| Coefficient de dilatation | $94.8.10^{-7}$ |
| Indice de réfraction ($n_D$) | 1,551 |
| Température de travail ($T_w$) | 1046°C |
| T Littleton | 753°C |

4. Composition selon la revendication 1, caractérisée en ce que ::

| | |
|---|---|
| $SiO_2$ | 55.150 |
| $K_2O$ | 8.900 |
| $Na_2O$ | 4.600 |
| CaO | 1.600 |
| SrO | 8.200 |
| ZnO | 18.800 |
| $B_2O_3$ | 0.400 |
| $Sb_2O_3$ | 0.750 |
| $SnO_2$ | 0.800 |
| $La_2O_3$ | 0.800 |
| TOTAL | 100.00 |

composition conduisant à un verre présentant les caractéristiques suivantes :

| | |
|---|---|
| Densité (D) | 2,91 |

| Coefficient de dilatation | 94.7.10⁻⁷ |
|---|---|
| Indice de réfraction ($n_D$) | 1,554 |
| Température de travail ($T_w$) | 1052°C |
| T Littleton | 752°C |

5. Composition selon la revendication 1, caractérisée en ce que :

| | |
|---|---|
| SiO$_2$ | 55.250 |
| K$_2$O | 6.000 |
| Na$_2$O | 6.800 |
| CaO | 6.200 |
| SrO | 6.500 |
| ZnO | 16.800 |
| Sb$_2$O$_3$ | 0.750 |
| Al$_2$O$_3$ | 0.300 |
| SnO$_{2(K)}$ | 0.800 |
| La$_2$O$_3$ | 0.600 |
| TOTAL | 100.000 |

composition conduisant à un verre présentant les caractéristiques suivantes :

| | |
|---|---|
| Densité (D) | 2,90 |
| Coefficient de dilatation | 96.4.10⁻⁷ |
| Indice de réfraction ($n_D$) | 1,558 |
| Température de travail ($T_w$) | 1032°C |
| T Littleton | 740°C |

**Patentansprüche**

1. Glaszusammensetzung mit charakteristischen Kristallglas-Eigenschaften, nämlich einer Dichte von mindestens 2.90, einem Brechungsindex von mindestens 1.545, einem charakteristischen Klang und einer erhöhten Transparenz, die aber kein toxisches Element und insbesondere kein Blei und auch kein Barium enthält, dadurch gekennzeichnet, daß sie, in Gew.-%, enthält:

| | | | |
|---|---|---|---|
| 53.0 | bis | 58.0 | Siliziumoxid SiO$_2$ |
| 6.0 | bis | 10.0 | Kaliumoxid K$_2$O |
| 4.5 | bis | 7.5 | Natriumoxid Na$_2$O |
| 0.0 | bis | 9.00 | Calciumoxid CaO |
| 0.0 | bis | 12.00 | Strontiumoxid SrO |
| 16.0 | bis | 21.0 | Zinkoxid ZnO |
| 0.5 | bis | 1.5 | Antimonoxid Sb$_2$O$_3$ |
| 0.0 | bis | 1.5 | Aluminiumoxid Al$_2$O$_3$ |
| 0.0 | bis | 2.5 | Zinnoxid SnO$_2$ |
| 0.0 | bis | 1.2 | Boroxid B$_2$O$_3$ |
| 0.0 | bis | 3.0 | Lanthanoxid La$_2$O$_3$ |
| 0.0 | bis | 2.0 | Titanoxid TiO$_2$ |
| 0.0 | bis | 0.3 | Lithiumoxid Li$_2$O |

wobei die Summe der Oxide von Calcium, Strontium und Zink in einer Menge zwischen 26.5 und 21 % enthalten sind, mit der Maßgabe:
- wenn SrO = 0, kann CaO bis 9 reichen,
- und wenn SrO ≠ 0,
  kann CaO zwischen 0 und der Ergänzung auf 31, abzüglich SrO + ZnO, liegen.

7

2. Zusammensetzung nach Anspruch 1, gekennzeichnet durch:

| | |
|---|---|
| $SiO_2$ | 53.544 |
| $K_2O$ | 8.206 |
| $Na_2O$ | 5.200 |
| CaO | 8.800 |
| SrO | 1.200 |
| ZnO | 20.400 |
| $B_2O_3$ | 0.300 |
| $Sb_2O_3$ | 0.750 |
| $SnO_2$ | 0.650 |
| $La_2O_3$ | 0.950 |
| TOTAL | 100.000 |

wobei die Zusammensetzung zu einem Glas führt, das die folgenden Eigenschaften besitzt:

| | |
|---|---|
| Dichte (D) | 2.90 |
| Ausdehnungskoeffizient | $95.1 \times 10^{-7}$ |
| Brechungsindex ($n_D$) | 1.561 |
| Verarbeitungstemperatur ($T_w$) | 1036°C |
| Littleton-T | 754°C. |

3. Zusammensetzng nach Anspruch 1, gekennzeichnet durch:

| | |
|---|---|
| $SiO_2$ | 55.925 |
| $K_2O$ | 8.975 |
| $Na_2O$ | 4.800 |
| SrO | 8.900 |
| ZnO | 18.800 |
| $B_2O_3$ | 0.300 |
| $Sb_2O_3$ | 0.750 |
| $SnO_{2\ (K)}$ | 0.600 |
| $La_2O_3$ | 0.950 |
| TOTAL | 100.000 wobei die Zusammensetzung zu einem Glas führt, das die folgenden Eigenschaften besitzt: |

| | |
|---|---|
| Dichte (D) | 2.90 |
| Ausdehnungskoeffizient | $94.8 \times 10^{-7}$ |
| Brechungsindex ($n_D$) | 1.551 |
| Verarbeitungstemperatur ($T_w$) | 1046°C |
| Littleton-T | 753°C. |

4. Zusammensetzung nach Anspruch 1, gekennzeichnet durch:

| | |
|---|---|
| $SiO_2$ | 55.150 |
| $K_2O$ | 8.900 |
| $Na_2O$ | 4.600 |
| CaO | 1.600 |
| SrO | 8.200 |
| ZnO | 18.800 |
| $B_2O_3$ | 0.400 |
| $Sb_2O_3$ | 0.750 |
| $SnO_2$ | 0.800 |
| $La_2O_3$ | 0.800 |
| TOTAL | 100.000 |

wobei die Zusammensetzung zu einem Glas führt, das die folgenden Eigenschaften besitzt:

| | |
|---|---|
| Dichte (D) | 2.91 |
| Ausdehnungskoeffizient | $94.7 \times 10^{-7}$ |
| Brechungsindex ($n_D$) | 1.554 |
| Verarbeitungstemperatur ($T_w$) | 1052°C |
| Littleton-T | 752°C. |

5. Zusammensetzung nach Anspruch 1, gekennzeichnet durch:

| | |
|---|---|
| $SiO_2$ | 55.250 |

| | |
|---|---|
| K$_2$O | 6.000 |
| Na$_2$O | 6.800 |
| CaO | 6.200 |
| SrO | 6.500 |
| ZnO | 16.800 |
| Sb$_2$O$_3$ | 0.750 |
| Al$_2$O$_3$ | 0.300 |
| SnO$_{2(K)}$ | 0.800 |
| La$_2$O$_3$ | 0.600 |
| TOTAL | 100.000 |

wobei die Zusammensetzung zu einem Glas führt, das die folgenden Eigenschaften besitzt:

| | |
|---|---|
| Dichte (D) | 2.90 |
| Ausdehnungskoeffizient | 96.4x10$^{-7}$ |
| Brechungsindex (n$_D$) | 1.558 |
| Verarbeitungstemperatur (T$_w$) | 1032°C |
| Littleton-T | 740°C. |

## Claims

1. Glass composition having the characteristic properties of crystal glass, that is a density of at least 2.90 and a refractive index of at least 1.545, as well as a characteristic ring and high clarity, but containing no toxic elements, notably lead and barium, characterized in that it contains in a percentage by weight :

| | | | |
|---|---|---|---|
| 53.0 | to | 58.0 | silica SiO$_2$ |
| 6.0 | to | 10.0 | potassium oxide K$_2$O |
| 4.5 | to | 7.5 | sodium oxide Na$_2$O |
| 0.0 | to | 9.00 | calcium oxide CaO |
| 0.0 | to | 12.00 | strontium oxide SrO |
| 16.0 | to | 21.0 | zinc oxide ZnO |
| 0.5 | to | 1.5 | antimony oxide Sb$_2$O$_3$ |
| 0.0 | to | 1.5 | aluminium oxide Al$_2$O$_3$ |
| 0.0 | to | 2.5 | tin oxide SnO$_2$ |
| 0.0 | to | 1.2 | boron oxide B$_2$O$_3$ |
| 0.0 | to | 3.0 | lanthanum oxide La$_2$O$_3$ |
| 0.0 | to | 2.0 | titanium oxide TiO$_2$ |
| 0.0 | to | 0.3 | lithium oxide Li$_2$O |

the sum of the oxides of calcium, strontium and zinc lying between 26.5 and 31 %, with the supplementary conditions that :

when SrO = 0
CaO may be increased to 9
and when SrO ≠ 0
CaO lies between 0 and the complement to 31, reduced by SrO + ZnO.

2. Composition according to claim 1, characterized in that :

| | |
|---|---|
| SiO$_2$ | 53.544 |
| K$_2$O | 8.206 |
| Na$_2$O | 5.200 |
| CaO | 8.800 |
| SrO | 1.200 |

| | |
|---|---|
| ZnO | 20.400 |
| $B_2O_3$ | 0.300 |
| $Sb_2O_3$ | 0.750 |
| $SnO_2$ | 0.650 |
| $La_2O_3$ | 0.950 |
| TOTAL | 100.000 |

is a composition giving a glass having the following properties :

| | |
|---|---|
| Density (D) | 2.90 |
| Coefficient of expansion | $95.1 \times 10^{-7}$ |
| Refractive index ($n_D$) | 1.561 |
| Working temperature ($T_w$) | 1036°C |
| T Littleton | 754°C |

**3.** Composition according to claim 1, characterized in that :

| | |
|---|---|
| $SiO_2$ | 55.925 |
| $K_2O$ | 8.975 |
| $Na_2O$ | 4.800 |
| SrO | 8.900 |
| ZnO | 18.800 |
| $B_2O_3$ | 0.300 |
| $Sb_2O_3$ | 0.750 |
| $SnO_{2\ (K)}$ | 0.600 |
| $La_2O_3$ | 0.950 |
| TOTAL | 100.000 |

is a composition giving a glass having the following properties :

| | |
|---|---|
| Density (D) | 2.90 |
| Coefficient of expansion | $94.8 \times 10^{-7}$ |
| Refractive index ($n_D$) | 1.551 |
| Working temperature ($T_w$) | 1046°C |
| T Littleton | 753°C |

**4.** Composition according to claim 1, characterized in that :

| | |
|---|---|
| $SiO_2$ | 55.150 |
| $K_2O$ | 8.900 |
| $Na_2O$ | 4.600 |
| CaO | 1.600 |
| SrO | 8.200 |
| ZnO | 18.800 |
| $B_2O_3$ | 0.400 |
| $Sb_2O_3$ | 0.750 |
| $SnO_2$ | 0.800 |
| $La_2O_3$ | 0.800 |
| TOTAL | 100.000 |

is a composition giving a glass having the following properties :

| | |
|---|---|
| Density (D) | 2.91 |
| Coefficient of expansion | $94.7 \times 10^{-7}$ |
| Refractive index ($n_D$) | 1.554 |
| Working temperature ($T_w$) | 1052°C |
| T Littleton | 752°C |

**5.** Composition according to claim 1, characterized in that :

| | |
|---|---|
| $SiO_2$ | 55.250 |
| $K_2O$ | 6.000 |
| $Na_2O$ | 6.800 |
| CaO | 6.200 |
| SrO | 6.500 |
| ZnO | 16.800 |
| $Sb_2O_3$ | 0.750 |

10

| | |
|---|---|
| $Al_2O_3$ | 0.300 |
| $SnO_{2\ (K)}$ | 0.800 |
| $La_2O_3$ | 0.600 |
| TOTAL | 100.000 |

is a composition giving a glass having the following properties :

| | |
|---|---|
| Density (D) | 2.90 |
| Coefficient of expansion | $96.4 \times 10^{-7}$ |
| Refractive index ($n_D$) | 1.558 |
| Working temperature ($T_w$) | 1032°C |
| T Littleton | 740°C |